# EUROPÄISCHE PATENTSCHRIFT

(11) **EP 2 933 084 B1**
(45) Veröffentlichungstag und Bekanntmachung des Hinweises auf die Patenterteilung: **10.04.2019**
(21) Anmeldenummer: 15164053.9
(22) Anmeldetag: 17.04.2015
(51) Int. Cl.: B29C 39/24, B29C 33/00

(54) **FORMWERKZEUG MIT VERDREHSICHER WIE AUCH SCHWIMMEND GELAGERTEN WERKZEUGKOMPONENTEN**
MOULD WITH MOULDCOMPONENTS THAT ARE FLOATING AND PROTECTED AGAINST TORSION.
MOULE AVEC DES COMPOSANTS FLOTTANTS ET FIXÉS SOLIDAIREMENT EN ROTATION

(30) Priorität: 17.04.2014 DE 102014105595; 17.04.2014 DE 202014101866 U
(43) Veröffentlichungstag der Anmeldung: 21.10.2015
(73) Patentinhaber: Thielke, Joachim, 30629 Hannover (DE)
(72) Erfinder: Thielke, Joachim, 30629 Hannover (DE)
(74) Vertreter: Habenicht, Wieland

(56) Entgegenhaltungen:
- EP-A1- 2 286 974
- WO-A2-2006/005324
- FR-A1- 2 991 226
- US-A1- 2002 145 232

## Beschreibung

Die Erfindung betrifft Formwerkzeuge zur Formung von Werkstücken, die ausgestattet sind mit wenigstens einem ersten Formungsteil, das eine Kavität für die Formung des Werkstückes aufweist.

Formwerkzeuge der betreffenden Art sind bekannt zur Verwendung insbesondere mit Werkzeugmaschinen, wie sie im Weiteren noch näher bezeichnet werden, und dienen der Formung von Werkstücken während eines Formungsvorganges durch Umformen bzw. Urformen.

Für die Formung von Werkstücken in größeren Stückzahlen werden vielfach Formwerkzeuge der betreffenden Art mit einer hohen Standzeit verwendet, die unter anderem auch als Dauerformen bezeichnet werden. Formenwerkzeuge der betreffenden Art in ihrer Ausbildung als so genannte Dauerformen können zur Herstellung einer Vielzahl von Werkstücken mittels nur eines Exemplars eines entsprechenden Formwerkzeuges verwendet werden, wodurch sie für die Herstellung von Serienteilen geeignet sind.

Demgegenüber sind für die Herstellung von Einzelteilen oder Kleinserien Formwerkzeuge der betreffenden Art als so genannte verlorene Formen ausgeführt, die gegenüber der vorgenannten Variante eines Dauerformwerkzeugs über eine deutlich geringere Standzeit verfügen.

Vor diesem Hintergrund sind Formwerkzeuge zur Formung von Werkstücken der betreffenden Art ausgestattet mit wenigstens einem ersten Formungsteil, das eine Kavität für die Formung des Werkstückes aufweist. Dabei kann die Kavität während des Formungsvorganges als offene oder geschlossene Kavität ausgebildet sein.

In die Kavität wird zur Formung eines Werkstückes ein Halbzeug bzw. eine Gussmasse eingebracht, um es innerhalb des Formungsvorganges entsprechend an die gewünschte Form bzw. das gewünschte Volumen durch Formung anzupassen.

Insbesondere bei Gusswerkzeugen, beispielsweise für Aluminium wie auch Grauguss, kommen darüber hinaus Formkerne zum Einsatz, die ggf. nach dem Formungsvorgang ihre Verwendbarkeit verlieren. Insofern kann ein Formwerkzeug der betreffenden Art für die wesentliche Formbestimmung des Werkstückes lediglich ein Formungsteil aufweisen, das u.a. um Formkerne ergänzt wird, die für den Formungsvorgang in das Werkzeug eingesetzt bzw. an dem Werkzeug angeordnet werden, um beispielsweise die Wandstärke zu bestimmen bzw. die Innenoberfläche des Werkstückes festzulegen.

Des Weiteren sind bekannte Formwerkzeuge der betreffenden Art eingerichtet und ausgebildet als Spritzgussform, beispielsweise zur Verarbeitung von Kunststoffen für die Formung eines Werkstückes.

Des Weiteren sind Schieber gebräuchlich, die dazu dienen, Hinterschneidungen in einem Werkstück zu realisieren. Die betreffenden Schieber sind dabei an wenigstens einem Formungsteil angeordnet und werden während des Formungsvorgangs in eine formgebende Position bewegt, während sie für die Entformung, die sich an dem Formungsvorgang anschließt, in eine Anfangsposition bewegt werden, um das Werkstück aus der Form entformen zu können.

Häufig wird bei einem Formwerkzeug der betreffenden Art ein erstes Formungsteil mit einem zweiten Formungsteil verwendet, bei dem das erste Formungsteil lösbar mit einem zweiten Formungsteil fügbar ist, die im miteinander gefügten Zustand eine Kavität begrenzen, die die Gestalt und das Volumen des zu formenden Werkstückes bestimmt.

Dabei besteht insbesondere wenigstens eines der Formungsteile aus verschiedenen Bauteilen, die im Verwendungszustand für die Formung eines Werkstückes an dem betreffenden Formungsteil gehalten sind. So können für die Formgebung unterschiedlicher Bauteile verwendet werden, die während des Formungsvorganges die Gestalt und das Volumen des herzustellenden Werkstückes bestimmen. Um die notwendigen Bauteile an wenigstens einem bzw. dem Formungsteil halten zu können, sind Formwerkzeuge der betreffenden Art ausgestattet mit einer Halteeinrichtung zum Halten von Bauteilen am Formungsteil, durch die Bauteile entsprechend an dem Formwerkzeug für ihre Funktionsbereitstellung bzw. -erfüllung gehalten sind.

Diese Bauteile übernehmen unterschiedliche Funktionen und können im Wesentlichen unbewegbar wie auch bewegbar an dem betreffenden Formungsteil angeordnet sein.

Bei Ausprägung eines vorgenannten Formwerkzeuges als Guss- bzw. Spritzgusswerkzeug sind verschiedene Bauteile vorgesehen, die einerseits die Formgebung des zu formenden Werkstückes bestimmen als auch dazu beitragen, dass ein Werkstück im Anschluss an dem Formungsvorgang aus dem Formwerkzeug entformbar ist.

Gleiches gilt analog bei Gusswerkzeugen, bei denen ein betreffendes Formwerkzeug ähnlich zu einem Spritzgusswerkzeug aufgebaut ist. Zur Erzeugung eines Werkstückes sind ebenfalls mindestens zwei Formungsteile vorgesehen, die in einem miteinander zusammengefügten Zustand einen Hohlraum, eine Kavität, ausbilden bzw. begrenzen, der/die das Volumen und die Formgebung des zu erzeugenden Werkstückes vorgibt.

Um ein Werkstück, das durch ein betreffendes Formwerkzeug als Guss- bzw. Spritzgussteil hergestellt worden ist, dem Formwerkzeug entnehmen zu können bzw. dieses zu entformen, werden sogenannte Auswerfer verwendet, die in eine Auswerferrichtung (Richtung entlang der Bauteilachse des Auswerfers) bewegbar an wenigstens einem der Formungsteile gehalten sind.

Die vorgenannten Bauteile in ihrer Ausprägung als Auswerfer, dienen insbesondere dazu, dass ein durch ein Formwerkzeug der betreffenden Art erzeugtes Werkstück nach dem Formungsvorgang besser diesem Formwerkzeug entnommen werden kann (Entformung). Dies ist insbesondere dann notwendig, wenn die Form des erzeugten Werkstückes Hinterschneidungen aufweist bzw. eine Formgebung aufweist, die das Entformen aus dem Formwerkzeug erschwert.

Des Weiteren können die vorgenannten Bauteile ausgebildet sein als Schieber, Säule, Pinole, Formkern und dergleichen.

Bei den bekannten Formwerkzeugen der betreffenden Art zeigt sich die Problematik, Bauteile präziser an dem Formwerkzeug zu halten, um beispielsweise und insbesondere die gewünschte Form des zu formenden Werkstückes möglichst ohne oder nur geringem Nachbearbeitungsaufwand zu erreichen.

Dazu ergibt sich eine Schwierigkeit bei den bislang bekannten Formwerkzeugen dadurch, Bauteile als Bestandteile eines betreffenden Formwerkzeuges derart zu lagern, dass diese Bauteile zum Ausgleich von u.a. Form- wie auch Lagetoleranzen, Toleranzketten wie auch durch Abnutzung bzw. Temperaturschwankungen hervorgerufene geometrische Abmessungsänderungen mit einer geringeren Bewegungstoleranz bewegbar an dem Formwerkzeug gehalten sind.

Die derzeit bekannten Formwerkzeuge weisen dazu u.a. eine Einschränkung dahingehend auf, dass die derzeit gebräuchlichen Haltemittel keine ausreichend genaue Lagerung bzw. Führung der treffenden Bauteile erlauben.

In FR2991226 A1 wird eine Vorrichtung zum Abformen einer Ohrgeometrie offenbart, bei der im wesentlichen eine Platte an das Ohr gehalten wird, wobei an der dem Ohr abgewandten Seite mittels eines Kolbens ein plastisches Material teilweise aus dem Vorratsbehältnis über zwei kanalartige Ausgänge in Richtung Ohr ausgetrieben wird, damit ein Teil des Materials sich hier plastisch an die Geometrie des Außenohres anpassen kann, um dann letztlich einen Abdruck entnehmen zu können. Durch die kreuzartige Geometrie des Kolbens ist dieser verdrehungssicher geführt.

WO2006/005324 A2 offenbart ein Karren und eine Vorrichtung zum Blasformen von Behältern, wobei ein Vorformling aus einem thermoplastischen Material zunächst entlang eines Transportweges im Bereich einer Heizstrecke einer thermischen Konditionierung unterworfen wird, wobei anschließend der Vorformling innerhalb einer Blasform durch Blasdruckeinwirkung in den Behälter umgeformt wird, wobei der Vorformling entlang mindestens eines Teils seines Transportweges durch die Heizstrecke rollt hindurch mit einem Umfangsbereich seiner Oberfläche direkt auf einer Bezugsfläche, die eine Rotationsbewegung des Vorformlings vorgibt.

So ist beispielsweise aus DE 10 2005 012 204 A1 eine Schnellverspannung für ein Formungsteil mittels eines Zapfens bekannt, wobei der Zapfen zu dessen Bewegung aus einem Feststellzustand, indem dieser hinsichtlich seiner Bewegbarkeit fixiert ist, in einen Bewegbarkeitszustand überführt wird, so dass dieser beweglich zu dem Formoberteil gelagert ist.

EP 2286974 A1 offenbart ein Formwerkzeug zur Formung von Werkstücken, mit wenigstens einem ersten Formungsteil, das eine Kavität für die Formung des Werkstückes aufweist, mit einer Haltereinrichtung zum Halten von Bauteilen am Formungsteil, wobei die Halteeinrichtung Lagerungsmittel zur schwimmenden Bauteillagerung aufweist, die derart eingerichtet und ausgebildet sind, dass wenigstens ein Bauteil in Umfangsrichtung zu dessen Bauteilachse verdrehgesichert und radial zu dessen Bauteilachse entlang wenigstens zu einer ersten Führungsrichtung bewegbar gelagert ist, wobei die Lagerungsmittel zur schwimmenden Bauteillagerung wenigstens einen Führungskörper aufweisen, an dem das Bauteil radial zu seiner Bauteilachse und relativ zum Führungskörper an einer Führung in der ersten Führungsrichtung bewegbar angeordnet ist, wobei der Führungskörper wiederum quer zur ersten Führungsrichtung und radial zur Bauteilachse an einer zweiten Führung in einer zweiten Führungsrichtung bewegbar angeordnet ist.

Vor diesem Hintergrund liegt der Erfindung die Aufgabe zugrunde, eine Anordnung von Bauteilen an einem Formwerkzeug der betreffenden Art zu verbessern, um insbesondere zu bewirken, dass die Führung eines entsprechenden Bauteils präziser erfolgen kann und gleichfalls Toleranzen des Bauteiles wie auch Toleranzen der das Bauteil umgebenden Bereichen besser ausgleichen zu können.

Die Erfindung entfernt sich bei der ihr gestellten Aufgabe zunächst von dem Gedanken, feste Einspannungen für das betreffenden Bauteil vorzusehen, um durch entsprechende Anformungen bzw. eine entsprechende Formgebung des Bauteiles eine Zwangsführung zu erreichen, die bewirkt, dass das betreffende Bauteil exakter bzw. präziser an einem Formwerkzeug der betreffenden Art gelagert ist.

Des Weiteren löst sich die Erfindung von dem Gedanken, die verwendeten Werkstoffe eines Bauteiles derart zu verändern, dass dieses formflexibel ausgestaltet ist, um entsprechende Toleranzen durch Verformung des Bauteiles auszugleichen.

Die nachfolgenden Ausführungen zur Erfindung beziehen auf einen Verwendungszustand eines erfindungsgemäßen Formwerkzeugs, in dem die einzelnen Bestandteile in Anordnung zur Funktionserfüllung für den bestimmungsgemäßen Gebrauch eines erfindungsgemäßen Formwerkzeuges angeordnet sind bzw. das Formwerkzeug zu dessen Verwendung einsetzbar ist.

Die Erfindung entfernt sich von den zuvor genannten Ansätzen und löst die ihr gestellte Aufgabe zunächst dadurch, dass das betreffende Bauteil derart schwimmend gelagert ist, dass eine Führung für das Bauteil vorgesehen ist, durch die das Bauteil radial zu dessen Bauteilachse in wenigstens eine Richtung entlang einer Führungsrichtung bewegungsgeführt ist.

Dabei verfolgt die Erfindung die Zielsetzung, die bislang bekannten Bauteile als Bestandteile eines erfindungsgemäßen Formwerkzeuges möglichst unverändert zu belassen.

Dazu sieht die Erfindung für ein erfindungsgemäßes Formwerkzeug vor, dass die Halteeinrichtung Lagerungsmittel zur schwimmenden Bauteillagerung aufweist, die derart eingerichtet und ausgebildet sind, dass wenigstens ein Bauteil in Umfangsrichtung zu dessen Bauteilachse verdrehgesichert und radial zu dessen Bauteilachse entlang wenigstens einer ersten Führungsrichtung bewegbar gelagert bzw. bewegungsgeführt ist.

Erfindungsgemäß ist die Bauteilachse eines Bauteiles die Achse, in der dieses Bauteil längsterstreckt ist. Die Achse, in der ein Bauteil längsterstreckt ist, ergibt sich dabei im Sinne der Erfindung zunächst durch die geometrischen Abmaße, so dass die geometrische Länge in Richtung der Bauteilachse gegenüber den weiteren Längenabmessungen die größte ist. Ferner kann sich im Rahmen der Erfindung die Bauteilachse gegebenenfalls auch durch die Bereitstellung einer Funktion ergeben, so dass das Bauteil in Richtung der Bauteilachse eine Ausprägung zur Funktionsbereitstellung aufweist, die insbesondere nicht der eigenen Lagerung an dem Formwerkzeug dient.

Die Vorgabe der Bewegungstoleranz innerhalb einer schwimmenden Bauteillagerung kann erfindungsgemäß dadurch erfolgen, dass wenigstens ein Führungskörper verwendet wird, an dem eine Führung für das Bauteil ausgebildet ist, durch das wiederum bewirkt wird, dass das Bauteil in eine Richtung bewegungsgeführt ist.

Dazu sieht die Erfindung für die Bewegbarkeit des Bauteiles radial zu dessen Bauteilachse einen Führungskörpers vor. Dieser ermöglicht die Bewegbarkeit des Bauteiles in einer Richtung radial zur Bauteilachse, während die Führung selbst in einer Richtung quer zur vorgenannten Richtung und ebenfalls radial zur Bauteilachse bewegbar an wenigstens einem der Formungsteile angeordnet ist.

Dadurch ergibt sich für die schwimmende Bauteillagerung durch die betreffenden Lagerungsmittel eine gekreuzte Bewegungsführung des Bauteiles in zwei radiale Richtungen zu dessen Bauteilachse.

Demgemäß ist vorteilhafterweise erreicht, dass eine Abhängigkeit der Führungen zueinander zur Bewegungsführung des Bauteiles durch die Lagerungsmittel für die schwimmende Bauteillagerung genutzt wird, die konstruktiv komplexe Anpassungen entbehrlich machen.

Insofern entsteht durch die Ausgleichsmöglichkeit von geometrischer Toleranzen, wie sie eingangs auszugsweise genannt wurden, ein Vorteil durch die Erfindung in einer Erhöhung der Standzeit eines entsprechenden Formwerkzeuges bzw. dessen Verwendungsdauer. Zudem entstehen Vorteile in der Instandhaltung eines erfindungsgemäßen Formwerkzeugs, da beim Erreichen einer Verschleißgrenze dieser Führungskörper ausgetauscht werden kann, ohne dass das Werkzeug einer weiteren Bearbeitung zu unterwerfen ist.

Ein weiterer Vorteil besteht darin, dass die Realisierung einer schwimmenden Bauteillagerung auf einfache Art und Weise durch einen Führungskörper ermöglicht ist. Dadurch entstehen wiederum Kostenvorteile.

Daher sieht die Erfindung vor, dass die Lagerungsmittel zur schwimmenden Bauteillagerung wenigstens einen Führungskörper aufweisen, an dem das Bauteil radial zu seiner Bauteilachse und relativ zum Führungskörper an einer Führung, insbesondere einer Linearführung, in der ersten Führungsrichtung bewegbar angeordnet ist, wobei der Führungskörper wiederum quer zur ersten Führungsrichtung und radial zur Bauteillängsachse an einer zweiten Führung in einer zweiten Führungsrichtung bewegbar angeordnet ist.

Es entsteht des Weiteren der Vorteil, dass eine präzisierte Bewegungsführung auf einfache Art und Weise sowie kostengünstig realisierbar ist, wobei gleichzeitig erreicht ist, dass eine ungewünschte Eigendrehung des Bauteiles um dessen Bauteilachse unterbunden ist, wodurch eine Verdrehsicherung für das Bauteil durch die Lagerungsmittel zur Bautteillagerung realisiert ist.

Der Vorteil eines erfindungsgemäßen Formwerkzeuges liegt u.a. darin, dass auf einfache Art und Weise eine Verdrehsicherung eines Bauteiles um dessen Bauteilachse ermöglicht ist, wobei trotzdem eine seitliche/radiale Verschiebung des Bauteiles zu dessen Bauteilachse ermöglicht ist.

Des Weiteren ist erreicht, dass die Bewegbarkeit des Bauteiles radial zu dessen Bauteilachse durch die Bewegungsführung mittels der Lagerungsmittel zur schwimmenden Bauteillagerung einstellbar ist. Insofern ist es erfindungsgemäß möglich, die möglichen Wegstrecken des Bauteiles in radialer Richtung zur Bauteilachse zu begrenzen. Ferner ist vorteilhafterweise auch die Bewegbarkeit des Bauteiles in Richtung seiner Bauteilachse begrenzbar.

Dadurch ist es erfindungsgemäß ermöglicht, das Bauteil gegenüber den bestehenden Haltemitteln präzisiert in den entsprechenden Richtungen zu führen und gleichfalls eine Eigendrehung des Bauteiles um dessen Bauteilachse zu unterbinden.

Dabei ist durch den Führungskörper bestimmt, in welcher Art und Weise eine Bewegung des Bauteiles in eine Führungsrichtung erfolgen kann. So kann die Führung als Linearführung für das Bauteil ausgebildet sein, entlang der das Bauteil wenigstens abschnittsweise bzw. im Wesentlichen geradlinig bewegungsgeführt ist. Gleichfalls ist es möglich, dass ein Bewegungspfad für die Bewegbarkeit des Bauteiles vorgegeben ist, der abweichend von bzw. ergänzend zu einer linearen Führung für das Bauteil gestaltet sein kann.

Durch ein erfindungsgemäß gebildetes Formwerkzeug entsteht der Vorteil, dass im Rahmen der Erfindung durch eine schwimmende Lagerung des Bauteiles ermöglicht als auch bewirkt ist, dass dieses verdrehsicher um dessen Bauteilachse an wenigstens einem Formungsteil eines erfindungsgemäßen Formwerkzeugs gehalten ist. Dies hat zum Ziel, dass eine ungewünschte Eigendrehung des Bauteiles um dessen Bauteilachse unterbunden bzw. auf ein tolerierbares Ausmaß beschränkt ist.

Eine entsprechende Verdrehsicherung für das Bauteil kann erfindungsgemäß auf vielfache Art und Weise erreicht werden. So ist es möglich, die Formgebung des Bauteiles auszunutzen und die Führung für das Bauteil derart komplementär zu wenigstens einem Formabschnitt des Bauteiles auszubilden, dass eine Verdrehbarkeit um dessen Bauteilachse verhindert ist, jedoch eine Bewegbarkeit des Bauteiles in wenigstens einer Richtung radial zur Bauteilachse ermöglicht ist.

Ferner entsteht durch die Erfindung der Vorteil, dass bei Ausprägung eines Bauteiles als Auswerfer die Bewegungsführung des Auswerfers verbessert ist, insofern, dass durch eine erfindungsgemäße Bewegungsfreiheit des Auswerfers die Formgebung des zu stellenden Werkzeuges beim Formungs- bzw. Umformungsvorgang durch Kontakt des Auswerfers mit dem Werkstück in ungewünschter Art und Weise nicht unnötig negativ beeinflusst wird.

Dadurch ist ebenfalls erfindungsgemäß erreicht, dass ein betreffender Auswerfer die Formtreue des Werkstückes im Wesentlichen unbeeinträchtigt lässt. Dabei ist vorteilhafterweise erreicht, dass die Nachbearbeitung eines entsprechenden Werkstückes unterbleiben kann, sodass neben Zeit- ebenfalls Kostenvorteile entstehen.

Ferner wird durch die Erfindung ein geringerer Herstellungspreis bzw. die Herstellung eines Werkstückes begünstigt.

Die Erfindung sind breite Anwendungsfelder aufgeschlossen, so dass ein erfindungsgemäßes Formwerkzeug beispielsweise und insbesondere verwendbar ist in den Bereichen:
- Druckguss (Al, Mg, und deren Legierungen),
- Spritzguss (Kunststoff),
- Kernkästen (Organik, Anorganik, Coldbox, Hotbox),
- Kokillen,
- Umformtechnik (Schmieden, Tiefziehen).

Die Erfindung entfaltet besondere Vorteile bei der Verwendung eines erfindungsgemäßen Formwerkzeugs in Verbindung mit einer Werkzeugmaschine zur Formung von Werkstücken, indem die Verwendungsdauer bzw. die Standzeit erhöht ist, wodurch die Herstellung von entsprechenden Werkstücken über einen längeren Zeitraum erfolgen kann. Insofern ist ein erfindungsgemäßes Formwerkzeug beispielsweise und insbesondere auch zur Verwendung für eine Werkzeugmaschine vorgesehen.

Dabei umfasst der Begriff Werkzeugmaschine im Sinne der Erfindung ebenfalls Maschinen für die Formgebung von Werkstücken durch Ur- bzw. Umformen. Insofern kann im Sinne der Erfindung eine Werkzeugmaschine beispielsweise und insbesondere eine Umformpresse, eine Extrusionsmaschine, eine Presse oder Stanze, bzw. eine Maschine für die Kunststoffverarbeitung wie auch eine Maschine zur Herstellung von Gusswerkstücken sein. Dazu ist wenigstens ein erfindungsgemäßes Formwerkzeug an einer betreffenden Werkzeugmaschine für die Formung eines Werkstückes, insbesondere abnehmbar, gehalten.

Insofern können erfindungsgemäße Formwerkzeuge als Dauerformwerkzeuge ausgebildet sein, die dazu dienen, eine Form für ein Werkzeugstück festzulegen, welches nach dem Formungsvorgang die gewünschte Gestalt bzw. das gewünschte Volumen einnimmt.

Daher kann ein erfindungsgemäßes Formwerkzeug auf unterschiedliche Art und Weise aufgebaut bzw. gestaltet und eingerichtet sein. Dabei kann die Form durch einen formgebenden Formungsteil bestimmt sein, der beispielsweise mit einer Gussmasse befüllt wird, sodass nach Erreichen eines ausreichend festen Zustandes des Gussmaterials der Formungsvorgang abgeschlossen ist. Daraufhin kann das Werkstück nach dessen Formung dem erfindungsgemäßen Formwerkzeug während des Entformungsvorganges entnommen werden.

Für komplexe Formungen von Werkstücken kann die Form für das Werkstück auf wenigstens zwei Formungsteile eines erfindungsgemäßen Formwerkzeuges aufgeteilt sein.

Insofern sieht eine vorteilhafte Weiterbildung der Erfindung ein Formwerkzeug zur Formung von Werkstücken vor, dass gekennzeichnet ist durch wenigstens ein erstes Formungsteil, das lösbar mit einem zweiten Formungsteil derart fügbar ist, dass die Formungsteile im miteinander gefügten Zustand eine Kavität begrenzen, die die Gestalt und das Volumen des zu formenden Werkstückes bestimmt.

Dabei kann im Rahmen der Erfindung ein zweites Formungsteil gleich oder anders gegenüber dem ersten Formungsteil gestaltet und eingerichtet sein.

Bauteile, die beispielsweise und insbesondere der Bereitstellung einer Führung oder der Formvorgabe für ein zu formendes Werkstück dienen, sind durch ein erfindungsgemäßes Formwerkzeug derart zu lagern, dass diese für ihre bestimmungsgemäße Funktionsbereitstellung entweder relativ unbewegbar oder bewegbar an wenigstens einem der Formungsteile gehalten bzw. gelagert sind.

Um den gestalterischen Aufwand der Lagerungsmittel bzw. einer Anordnung der Lagerungsmittel an dem Formwerkzeug gering zu halten, sieht eine vorteilhafte Weiterbildung der Erfindung vor, dass die Lagerungsmittel zur schwimmenden Bauteillagerung die gewünschte Bewegbarkeit für das Bauteil in Richtung dessen Bauteilachse bereitstellt, ohne das die Lagerungsmittel zur schwimmenden Bauteillagerung selbst eine entsprechende Bewegung in Richtung der Bauteilachse des Bauteiles ausführen müssen.

Demgegenüber ist erfindungsgemäß ebenfalls berücksichtigt, dass die Lagerungsmittel zur schwimmenden Bauteillagerung des Bauteiles in Richtung der Bauteilachse verschiebbar an wenigstens einem bzw. dem Formungsteil angeordnet sind, um dadurch eine entsprechende Bewegbarkeit des Bauteiles zu ermöglichen.

Daher sieht die vorteilhafte Weiterbildung der Erfindung vor, dass das Bauteil in Richtung seiner Bauteilachse relativ zu den Lagerungsmittel zur schwimmenden Bauteillagerung bewegbar bzw. unbewegbar gelagert ist. Dadurch ist eine Eigenbewegung der Lagerungsmittel zur schwimmenden Bauteillagerung verzichtbar, wodurch der konstruktive Aufwand entsprechend reduzierbar ist.

Die Realisierung einer schwimmenden Lagerung kann auf vielfacher Art und Weise erfolgen. Beispielsweise ist es möglich, das Bauteil, das schwimmend zu lagern ist, entsprechend mit Formen zu versehen, die bewirken, dass beispielsweise eine Verdrehung/Verdrehbarkeit des Bauteiles um dessen Bauteilachse (Eigendrehung) unterbunden ist.

Dazu berücksichtigt die Erfindung für eine Bewegungsführung des Bauteiles, dass das Bauteil an wenigstens einer der Linearführungen derart aufgenommen ist, dass dieses insbesondere zu ihrer Bauteilachse verdrehsicher an einer der Linearführungen gehalten ist. Dementsprechend sieht die Erfindung ebenfalls vor, dass die vorgenannte Linearführung wiederum durch eine zweite Linearführung derart geführt ist, dass diese quer zu der von ihr für das Bauteil vorgesehene Bewegungsrichtung an einem Formungsteil eines erfindungsgemäßen Formwerkzeugs geführt ist.

Dadurch ergibt sich eine miteinander in Beziehung stehende Führungskombination der Linearführungen, durch die bewirkt ist, dass zwei Bewegungsrichtungen, die quer zueinander gerichtet sind, durch eine entsprechende erfindungsgemäße schwimmende Lagerung vorgegeben sind.

Dazu ist in einer vorteilhaften Ausbildung der Erfindung vorgesehen, dass die Führung bzw. die zweite Führung eine Linearführung ist.

Für eine Begrenzung der Bewegbarkeit des Bauteiles in wenigstens einer radialen Richtung zu dessen Bauteilachse ist eine weitere vorteilhafte Weiterbildung der Erfindung darauf bezogen, dass der Führungskörper ein Loch aufweist, in dem das Bauteil zwischen dessen freien Enden wenigstens abschnittsweise aufgenommen ist, wobei der Lochrand des Loches die Bewegbarkeit des Bauteiles entlang der ersten Führungsrichtung bzw. radial zu dessen Bauteilachse begrenzt.

Erfindungsgemäß ist dadurch erreicht, dass die Bewegungstoleranz eines Bauteiles weitergehend eingrenzbar bzw. vorgebbar ist. Darüber hinaus ist im Rahmen der Erfindung vorteilhafterweise erreicht, dass die Richtungen bzw. die Bewegbarkeit, um den sich das Bauteil in einer Richtung bewegen darf, durch die schwimmende Lage festgelegt ist. Darüber hinaus ist es möglich, die schwimmende Bauteillagerung derart vorzunehmen, dass die Mittel zur schwimmenden Bauteillagerung eine Einstellbarkeit der Führung vorsieht, woraufhin Bewegungstoleranzen ebenfalls einstellbar sind. Dies kann beispielsweise durch die Form des Loches erreicht werden, dass als Langloch, ovales wie auch kreisrundes Loch und dergleichen geformt sein kann.

Eine kostengünstige und einfache Gestaltung des Loches kann durch ein im Wesentlichen kreisrundes Loch realisiert werden, wobei die Bewegbarkeit des Bauteiles in radialer Richtung zur Bauteilachse wiederum durch die Art bzw. Form der Führung, die durch den Führungskörper für das Bauteil bereitgestellt wird, begrenzbar ist.

Zur Realisierung einer Verdrehsicherung zur Unterbindung einer Eigendrehung des Bauteiles um dessen Bauteilachse ist in einer weiteren vorteilhaften Weiterbildung der Erfindung ein Adapter für das Bauteil vorgesehen, mittels dem das Bauteil an dem Führungskörper bewegungsgeführt angeordnet ist. Dazu ist entsprechend berücksichtigt, dass ein freies Ende, insbesondere der Kopf des Bauteiles, kraft- bzw. form- bzw. stoffschlüssig an einem Adapter gehalten ist, mittels dem das Bauteil an der Führung des Führungskörpers entlang der ersten Führungsrichtung bewegbar angeordnet ist.

Um die Bauteile, die durch die Lagerungsmittel zur schwimmenden Bauteillagerung entsprechend zu lagern sind, möglichst unbeeinflusst zu lassen, ist in einer weiteren vorteilhaften Weiterbildung der Erfindung vorgesehen, dass die Führung des Führungskörpers zur formschlüssigen Führung des Bauteiles, insbesondere mittels des Kopfes des Bauteiles, ausgebildet ist.

Im Sinne der Erfindung ist der Kopf des Bauteiles an einem seiner freien Enden gebildet, welches insbesondere der Lagerung des Bauteiles dient.

Das Halten des Bauteiles an dem Adapter kann dabei auf unterschiedliche Art und Weise erfolgen. So kann dieses beispielsweise und insbesondere durch Schweißen, Kleben oder Klemmen wie auch mittels einer Verschraubung und dergleichen an dem Adapter gehalten sein.

Es entsteht erfindungsgemäß der Vorteil, dass eine Anpassung des Bauteiles für die schwimmende Lagerung unterbleiben kann, wodurch wiederum Kostenvorteile entstehen. Des Weiteren ist eine einfache Austauschbarkeit des Bauteiles im Verschleißfall erreicht. Ferner können die erfindungsgemäßen Lagerungsmittel zur schwimmenden Bautteillagerung für verschiedenartige Bauteile verwendet werden, wobei lediglich der Adapter entsprechend auf das Bauteil abgestimmt sein muss.

Daher ist, um weitere Anpassungen des Bauteils zu vermeiden, im Rahmen der Erfindung berücksichtigt, dass ein Adapter verwendet wird, über den das Bauteil an der Führungsnut geführt wird.

Dabei entsteht der Vorteil, dass keine weiteren Anforderungen an das Bauteil für dessen schwimmende Lagerung gestellt sind. Die Anpassung des Bauteiles an die Bewegungsführung durch den Führungskörper ist dabei entsprechend durch den Adapter realisiert. Dadurch ist es möglich, Normalien für den Aufbau eines Formwerkzeuges zu verwenden, die handelsüblich und daher kostengünstig in der Anschaffung sind.

Demgemäß ist in einer weiteren vorteilhaften Weiterbildung der Erfindung vorgesehen, dass ein freies Ende, insbesondere der Kopf, des Bauteiles kraft- bzw. form- bzw. stoffschlüssig an einem Adapter gehalten ist, mittels dem das Bauteil an der Führung des Führungskörpers entlang der ersten Führungsrichtung bewegbar angeordnet ist.

Dazu ist in einer weiteren vorteilhaften Weiterbildung der Erfindung vorgesehen, dass der Führungskörper zur Ausbildung einer Führung für das Bauteil wenigstens eine Führungsnut aufweist, entlang der das Bauteil über den Adapter geführt ist. Demgemäß ist beispielsweise und insbesondere eine Linearführung auf einfache Art und Weise realisierbar. Der Adapter kann dabei durch seine äußeren Kanten mit den Nuträndern zur, insbesondere linearen, Führung des Bauteiles zusammenwirken.

Alternativ ist es möglich, die Form des Bauteiles zu dessen Bewegungsführung durch die Lagerungsmittel zur schwimmenden Bauteillagerung direkt zu verwenden, um auf die Verwendung eines Adapters zur Bewegungsführung des Bauteiles zum Zwecke dessen schwimmender Lagerung zu verzichten.

Dadurch entsteht der Vorteil, dass ein freies Ende eines Bauteiles dafür verwendet werden kann, um das Bauteil durch die Lagerungsmittel zur schwimmenden Bauteillagerung entsprechend zu lagern und betreffend seiner Bewegbarkeit zu führen.

Dazu ist in einer weiteren vorteilhaften Weiterbildung der Erfindung vorgesehen, dass die Führung des Führungskörpers zur formschlüssigen Führung des Bauteiles, insbesondere mittels des Kopfes des Bauteiles, ausgebildet ist.

Im Sinne der Erfindung ist durch eine formschlüssige Führung erreicht, dass das Bauteil entlang der Führung bzw. in Führungsrichtung mittels der Form des Bauteiles und dessen Zusammenwirken mit der Form der Führung bewegungsgeführt ist. Darüber hinaus ist es möglich, das freie Ende des Bauteiles bzw. dessen Kopf entlang einer Führungsnut zur Bewegungsführung des Bauteiles zu führen. Dazu kann auf einfache Art und Weise der Führungskörper wenigstens eine Führungsnut aufweisen, durch die das Bauteil beispielsweise und insbesondere mittels dessen Kopfes bewegungsgeführt ist.

Der Führungskörper selbst kann mittels einer Einrichtung zur Lagerung des Führungskörpers an wenigstens einem Formungsteil eines erfindungsgemäßen Formwerkzeugs gehalten sein. Durch die Anordnung des Führungskörpers an dem Formungsteil ist erreicht, dass durch die miteinander zusammenenwirkenden Führungen die Bewegungstoleranz eines Bauteiles durch die Lagerungsmittel zur schwimmenden Bauteillagerung vorgegeben werden kann, indem beispielsweise das Formwerkzeug wenigstens eine Führung aufweist, die beispielsweise und insbesondere durch eine Ausnehmung auf einfache Art und Weise realisierbar ist.

Des Weiteren ist es möglich, den Führungskörper über weitere Befestigungsmittel an dem Formungsteil zu halten bzw. anzuordnen. Dazu ist es unter anderem möglich, die Bewegungsführung für den Führungskörper mittels wenigstens eines zweiten Führungskörpers zu realisieren, der wiederum an dem Formungsteil eines erfindungsgemäßen Formwerkzeuges angeordnet ist. Dieses Teil ist insofern entbehrlich, als dass die Bewegungsführung für den Führungskörper direkt an dem betreffenden Formungsteil vorgesehen wird.

Die Bewegungstoleranz, die durch die Lagerungsmittel zur schwimmenden Bauteillagerung vorgegeben werden können, können auf einfache Art und Weise dadurch erreicht werden, dass beispielsweise durch eine Ausnehmung eine Bewegungsführung für den Führungskörper erfolgt, wobei die Kanten bzw. die Ränder dieser Ausnehmung eine Führung für das Bauteil vorgeben bzw. dessen Bewegungstoleranz festlegen. Dazu ist in einer vorteilhaften Weiterbildung der Erfindung vorgesehen, dass der Führungskörper wenigstens abschnittsweise in einer Ausnehmung eines Formungsteiles derart angeordnet ist, dass die Bewegbarkeit des Führungskörpers entlang der zweiten Führungsrichtung geführt und durch die Ausnehmungsränder bzw. -kanten der Ausnehmung begrenzt ist.

Für die weitere Bewegungsführung eines Bauteiles ist in einer weiteren vorteilhaften Weiterbildung der Erfindung berücksichtigt, dass wenigstens eines der Formungsteile eine Bauteilführung für das Bauteil aufweist, in der das Bauteil für eine Bewegung entlang seiner Bauteilachse bewegungsgeführt ist. In Zusammenwirken mit den Lagerungsmitteln zur schwimmenden Bauteillagerung ist erfindungsgemäß der Vorteil erreicht, dass eine Bewegungseinschränkung durch vorgenanntes Zusammenwirken erreicht ist.

Weitere Vorteile ergeben sich bei Ausprägung eines Bauteile, welches in Richtung zu dessen Bauteilachse bewegbar an wenigstens einem der Formungsteile gelagert ist. Dazu in einer vorteilhaften Weiterbildung der Erfindung berücksichtigt, dass die Lagerungsmittel zur schwimmenden Bauteillagerung zur Lagerungen wenigstens eines Auswerfers eingerichtet und ausgebildet sind, welcher der vereinfachten Entformung bzw. Entnahme des Werkstückes nach dessen Formung durch ein erfindungsgemäßes Formwerkzeug dient.

Erfindungsgemäß wird die Problematik gelöst, dass die einzelnen Werkzeugkomponenten im Fertigungsprozess hohe Temperaturunterschiede die zu entsprechenden thermisch bedingten geometrischen Veränderungen des Bauteiles bzw. Auswerfers führen, denen erfindungsgemäß durch eine entsprechende Lagerung des Bauteiles begegnet werden.

Dabei ergeben sich unter anderem durch thermische Beanspruchungen Form-, Lage- bzw. Geometrieveränderungen des Bauteiles bzw. dessen zweckbestimmten Anordnung, denen durch eine erfindungsgemäße flexible Lagerung eines entsprechenden Auswerfers unnötig hohen Belastung des Bauteiles bzw. dessen Ausfall entgegengewirkt werden kann.

Durch die Erfindung ergibt sich dabei unter anderem der Vorteil, dass durch eine Unterbindung bzw. maßgebliche Einschränkung der Eigendrehung des Auswerfers um dessen Bauteilachse bewirkt ist, dass der Auswerfer zur Entformung des Werkstückes gezielt auf die Außen- bzw. Innenkontur einwirken kann.

Schließlich ist in einer vorteilhaften Weiterbildung der Erfindung vorgesehen, dass ein Formwerkzeug, wie dies zuvor beschrieben worden ist, mit einer Werkzeugmaschine verwendet wird, um beispielsweise und insbesondere während eines Formungsvorganges ein Werkstück einfacher formen zu können.

Damit umfasst die Erfindung auch die Verwendung eines erfindungsgemäßen Formwerkzeuges mit einer Werkzeugmaschine, deren Ausprägung eingangs erläutert wurde.

Des Weiteren ist erfindungsgemäß vorgesehen, den Führungskörper bzw. den Adapter für das Bauteil jeweils einteilig bzw. einstückig zu gestalten bzw. auszuführen. Dadurch ergeben sich weitere Kostenvorteile durch die Erfindung.

Vorteilhafter Weise ist durch die Erfindung erreicht, dass unterschiedliche Wärmeausdehnungen aufgrund unterschiedlicher Temperaturen, herstellungsbedingte Fertigungstoleranzen der Bauteile wie auch ein Ausgleich von Toleranzketten auf einfache und wirkungsvolle Art und Weise realisiert sind.

Die Erfindung wird nachfolgend anhand der beigefügten Zeichnung näher erläutert, in der stellvertretend für eine Vielzahl erfindungsgemäß gebildeter Formwerkzeuge ein Ausführungsbeispiel eines erfindungsgemäßen Formwerkzeugs gezeigt ist.

Dabei bilden alle beanspruchten, beschriebenen und in der Zeichnung dargestellten Merkmale für sich genommen sowie in beliebiger Kombination miteinander den Gegenstand der Erfindung, unabhängig von ihrer Zusammenfassung in den Patentansprüchen und deren Rückbezügen sowie unabhängig von ihrer Beschreibung bzw. Darstellung in der Zeichnung.

Die Figuren der Zeichnung zeigen eine mögliche Ausführungsform eines erfindungsgemäßen Formwerkzeugs in jeweils einer schematischen Darstellung. Die Darstellungen sind daher insbesondere nicht maßstabsgetreu und zur besseren Übersicht auf die das Verständnis unterstützenden Elemente/Bauteile/Bestandteile reduziert.

Es zeigt:
Fig. 1 ein Ausführungsbeispiel eines erfindungsgemäßen Formwerkzeugs in einer Schnittdarstellung eines Formungsteiles des Formwerkzeugs gemäß einer Seitenansicht in schematischer Darstellungsweise als Prinzipdarstellung,

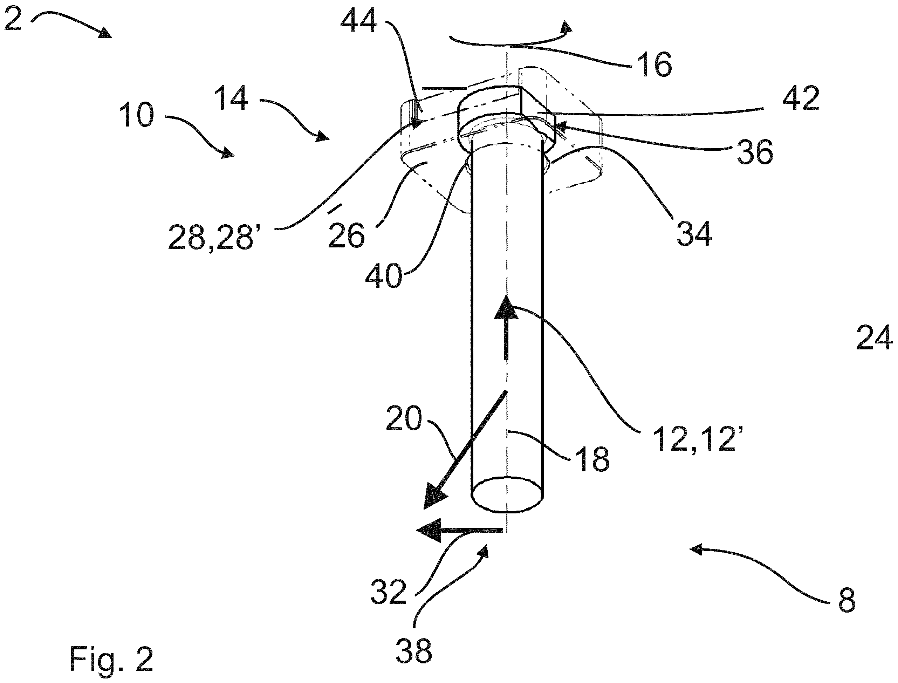

Fig. 2 das Ausführungsbeispiel eines erfindungsgemäßen Formwerkzeugs aus Fig. 1 in einer weiteren Darstellung einer Seitenansicht in schematischer Darstellungsweise, wobei die Darstellung auf den Auswerfer und dessen schwimmender Lagerung reduziert ist,

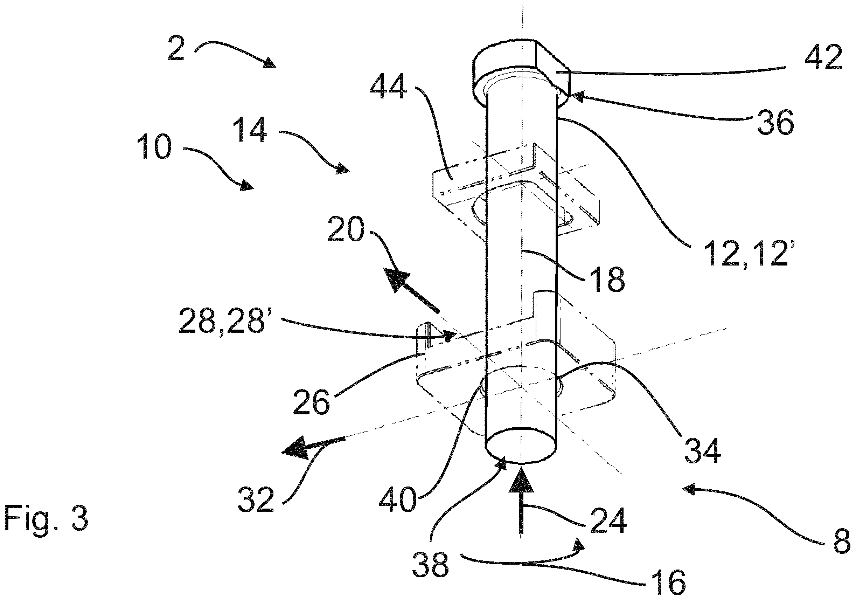

Fig. 3 das Ausführungsbeispiel eines erfindungsgemäßen Formwerkzeugs aus Fig. 1 bzw. Fig. 2, in gleicher Darstellungsweise wie in Fig. 2, wobei die einzelnen Komponenten zur besseren Übersicht beabstandet zueinander angeordnet sind.

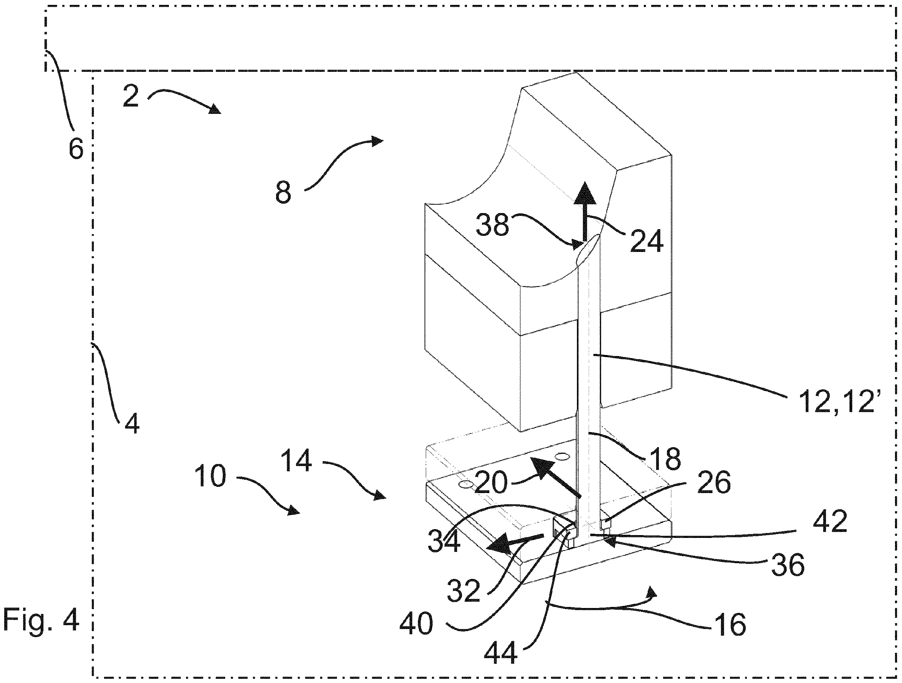

Fig. 4 das Ausführungsbeispiel eines erfindungsgemäßen Formwerkzeugs in einer Schnittdarstellung einer Seitenansicht in schematischer Darstellungsweise.

In den Figuren sind gleiche oder sich entsprechende Bauteile/Bestandteile bzw. Elemente mit den gleichen Bezugszeichen versehen. Ferner wird bei gleichem oder ähnlichem Aufbau zur besseren Übersicht die Beschreibung auf die Unterschiede zwischen den Ausführungsbeispielen bzw. Figuren reduziert.

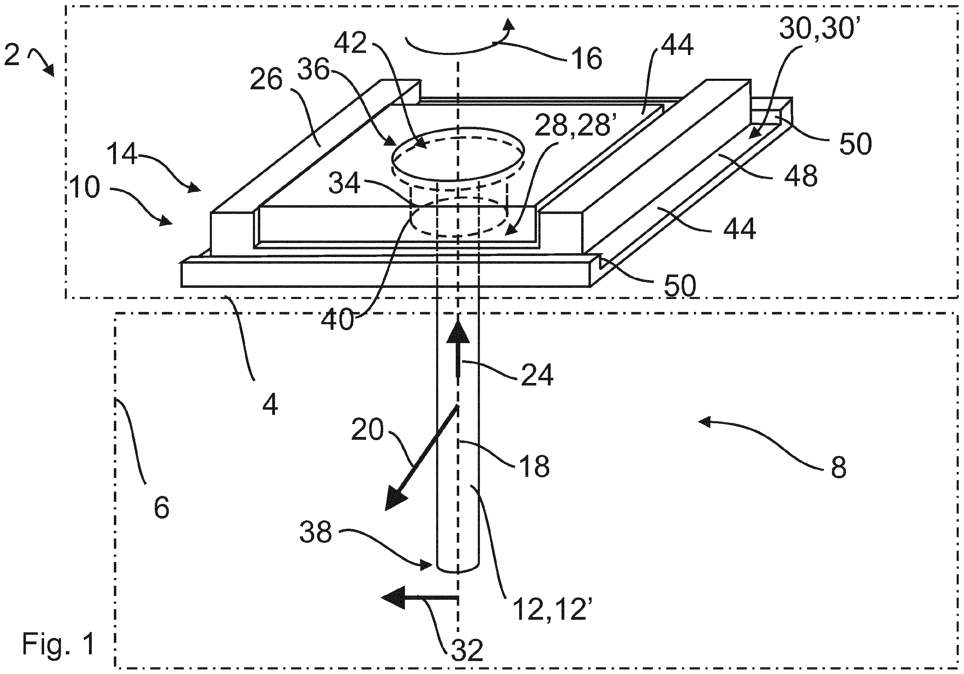

In Fig. 1 ist ein erstes Ausführungsbeispiel eines erfindungsgemäßen Formwerkzeugs 2 zur Formung von Werkstücken (nicht dargestellt) in einer Schnittdarstellung einer schematischen Seitenansicht gezeigt.

Das gezeigte Ausführungsbeispiel eines erfindungsgemäßen Formwerkzeugs 2 (nachfolgend auch kurz als Formwerkzeug 2 bezeichnet) ist als Spritzgussformwerkzeug für Kunststoffe eingerichtet und ausgebildet und weist dabei zunächst ein erstes Formungsteil 4 (durch gestrichelten Linienzug verdeutlicht) auf, das derart lösbar mit wenigstens einem zweiten Formungsteil 6 (durch gestrichelten Linienzug verdeutlicht) fügbar ist, dass die Formungsteile 4,6 im miteinander gefügten Zustand eine Kavität 8 begrenzen, die die Gestalt und das Volumen des zu formenden Werkstückes bestimmt.

Im Öffnungszustand, in dem die Formungsteile 4,6, zueinander beabstandet angeordnet sind, ist die Kavität 8 für eine Entformung des Werkstückes geöffnet.

Des Weiteren verfügt das Formwerkzeug 2 über eine Halteeinrichtung 10 zum Halten von Bauteilen 12 am Formungsteil 4. Die Halteeinrichtung 10 weist wiederum Lagerungsmittel 14 zur schwimmenden Bauteillagerung auf, die derart eingerichtet und ausgebildet sind, dass wenigstens ein Bauteil 12 in Umfangsrichtung 16 zu dessen Bauteilachse 18 verdrehgesichert und radial zu dessen Bauteilachse 18 entlang wenigstens einer ersten Führungsrichtung 20 bewegbar gelagert ist. Dabei ist das Bauteil 12 in Richtung 24 seiner Bauteilachse 18 relativ zu den Lagerungsmitteln 14 zur schwimmenden Bauteillagerung unbewegbar gelagert bzw. gehalten.

Die Lagerungsmittel 14 zur schwimmenden Bauteillagerung weisen einen Führungskörper 26 auf, an dem das Bauteil 12 radial zu seiner Bauteilachse 18 und relativ zum Führungskörper 26 an einer Führung 28, die als Linearführung 28' eingerichtet und ausgebildet ist, in der ersten Führungsrichtung 20 bewegbar angeordnet ist.

Dabei ist der Führungskörper 26 wiederum quer zur ersten Führungsrichtung 20 und radial zur Bauteillängsachse 18 an dem Formungsteil 4 an einer zweiten Führung 30 in einer zweiten Führungsrichtung 32 bewegbar angeordnet.

Beide Führungen 28, 30 sind als Linearführung 28,30' für die Bewegungsführung des Bauteiles 12 ausgebildet.

Zur Begrenzung der Bewegbarkeit des Bauteiles 12 weist der Führungskörper 26 ein Loch 34 auf, in dem das Bauteil 12 zwischen dessen freien Enden 36,38 abschnittsweise aufgenommen ist, wobei der Lochrand 40 des Loches 34 die Bewegbarkeit des Bauteiles 12 radial zu dessen Bauteilachse 18, insbesondere entlang der ersten Führungsrichtung 20, begrenzt.

Ein freies Ende 36 des Bauteiles 12 (insbesondere der Kopf 42 des Bauteiles) ist formschlüssig an einem Adapter 44 gehalten, mittels dem das Bauteil 12 an der Führung 28 des Führungskörpers 26 entlang der ersten Führungsrichtung 20 bewegbar angeordnet ist.

Der Führungskörper 26 weist wiederum zur Ausbildung der Führung 28 für das Bauteil 12 eine Führungsnut 46 auf, entlang der das Bauteil 12 mittels des Adapters 44 bewegungsgeführt ist.

Des Weiteren ist der Führungskörper 26 abschnittsweise in einer Ausnehmung 48 des Formungsteiles 4 derart angeordnet, dass die Bewegbarkeit des Führungskörpers 26 entlang der zweiten Führungsrichtung 30 geführt und durch die Ausnehmungskanten bzw. -ränder 50 begrenzt ist.

Ferner sind in diesem Ausführungsbeispiel eines erfindungsgemäßen Formwerkzeugs 2 der Führungskörper 26 als auch der Adapter 44 einstückig ausgeführt.

Die Darstellung des erfindungsgemäßen Formwerkzeugs 2 ist in Fig. 1 wie auch in den weiteren Figuren zum besseren Verständnis auf die vorgenannten, mit Bezugszeichen versehenen Bestandteile eines erfindungsgemäßen Formwerkzeuges 2 beschränkt.

Die weiteren Figuren zeigen die Lagerungsmittel 14 zur schwimmenden Bauteillagerung in weiteren Ansichten.

## Patentansprüche

1. Formwerkzeug zur Formung von Werkstücken,
- mit wenigstens einem ersten Formungsteil (4), das eine Kavität (8) für die Formung eines Werkstückes aufweist,
- mit einer Halteeinrichtung (10) zum Halten von Bauteilen (12) am Formungsteil (4),
- wobei,
- die Halteeinrichtung (10) Lagerungsmittel (14) zur schwimmenden Bauteillagerung aufweist, die derart eingerichtet und ausgebildet ist, dass wenigstens ein Bauteil (12) in Umfangsrichtung (16) zu dessen Bauteilachse (18) verdrehgesichert und radial zu dessen Bauteilachse (18) entlang wenigstens einer ersten Führungsrichtung bewegbar gelagert ist, wobei die Lagerungsmittel (14) zur schwimmenden Bauteillagerung wenigstens einen Führungskörper (26) aufweisen,
- an dem das Bauteil (12) radial zu seiner Bauteilachse (18) und relativ zum Führungskörper (26) an einer Führung (28), insbesondere einer Linearführung (28'), in der ersten Führungsrichtung angeordnet ist,
- wobei der Führungskörper (26) wiederum quer zur ersten Führungsrichtung (20) und radial zur Bauteilachse (18) an einer zweiten Führung (30) in einer zweiten Führungsrichtung (32) bewegbar angeordnet ist,
- **dadurch gekennzeichnet, dass**
- der Führungskörper (26) ein Loch (34) aufweist, in dem das Bauteil (12) zwischen dessen freien Enden (36, 38) wenigstens abschnittsweise aufgenommen ist, wobei der Lochrand (40) des Loches die Bewegbarkeit des Bauteiles (12) entlang der ersten Führungsrichtung (20) begrenzt.

2. Formwerkzeug zur Formung von Werkstücken nach Anspruch 1, **gekennzeichnet durch** wenigstens ein erstes Formungsteil (4), das derart lösbar mit wenigstens einem zweiten Formungsteil (6) fügbar ist, dass die Formungsteile (4, 6) im miteinander gefügten Zustand eine Kavität (8) begrenzen, die die Gestalt und das Volumen des zu formenden Werkstückes bestimmt.

3. Formwerkzeug nach Anspruch 1 oder 2, **dadurch gekennzeichnet, dass** das Bauteil (12) in Richtung (24) seiner Bauteilachse (18) relativ zu den Lagerungsmittel (14) zur schwimmenden Bauteillagerung bewegbar bzw. unbewegbar gelagert sind.

4. Formwerkzeug nach einem der vorhergehenden Ansprüche, **dadurch gekennzeichnet, dass** die Führung (28) bzw. die zweite Führung (30) eine Linearführung (28', 30') ist.

5. Formwerkzeug nach einem der vorhergehenden Ansprüche, **dadurch gekennzeichnet, dass** ein freies Ende (36, 38), insbesondere der Kopf (42), des Bauteiles (12) kraft- bzw. form- bzw. stoffschlüssig an einem Adapter (44) gehalten ist, mittels dem das Bauteil (12) an der Führung (28) des Führungskörpers (26) entlang der ersten Führungsrichtung (20) bewegbar angeordnet ist.

6. Formwerkzeug nach einem der vorhergehenden Ansprüche, **dadurch gekennzeichnet, dass** der Führungskörper (26) zur Ausbildung der Führung (28) für das Bauteil (12) wenigstens eine Führungsnut (46) aufweist, entlang der das Bauteil (12) mittels des Adapters (44) bewegungsgeführt ist.

7. Formwerkzeug nach einem der vorhergehenden Ansprüche, **dadurch gekennzeichnet, dass** die Führung (28) des Führungskörpers (26) zur formschlüssigen Führung des Bauteiles (12), insbesondere mittels des Kopfes (42) des Bauteiles (12), ausgebildet ist.

8. Formwerkzeug nach einem der vorhergehenden Ansprüche, **dadurch gekennzeichnet, dass** der Führungskörper (26) wenigstens abschnittsweise in einer Ausnehmung (48) eines Formungsteiles (4) derart angeordnet ist, dass die Bewegbarkeit des Führungskörpers (26) entlang der zweiten Führungsrichtung (32) geführt und durch die Ausnehmungsränder (50) begrenzt ist.

9. Formwerkzeug nach einem der vorhergehenden Ansprüche, **dadurch gekennzeichnet, dass** wenigstens eines der Formungsteile (4,6) eine Bauteilführung für das Bauteil (12) aufweist, in der das Bauteil (12) für eine Bewegung in Richtung (24) seiner Bauteilachse (18) bewegungsgeführt ist.

10. Formwerkzeug nach einem der vorhergehenden Ansprüche, **dadurch gekennzeichnet, dass** die Lagerungsmittel (14) zur schwimmenden Bauteillagerung wenigstens eines Auswerfers (12') eingerichtet und ausgebildet sind.

## Claims

1. Mould for moulding workpieces,
- with at least one first moulding part (4), which has a cavity (8) for shaping a workpiece,
- with a holding device (10) for holding components (12) on the moulding part (4),
- wherein the holding device (10) has support means (14) for supporting the component in a floating manner, which are configured and designed such that at least one component (12) is rotationally fixed in circumferential direction (16) relative to its component axis (18) and is supported to be movable radially to its component axis (18) along at least one first guiding direction (20), wherein the support means (14) have at least one guiding body (26) for supporting the component in a floating manner,
- on which the component (12) is arranged radially relative to its component axis (18) and relative to the guiding body (26) on a guide (28), in particular a linear guide (28'), in the first guiding direction (20),
- wherein the guiding body (26) is arranged to be movable perpendicular to the first guiding direction (20) and radially to the component axis (18) on a second guide (30) in a second guiding direction (32),
**characterised in that**
- the guiding body (26) has a hole (34) in which the component (12) is mounted at least partly between its free ends (36, 38), wherein the edge (40) of the hole delimits the mobility of the component (12) along the first guiding direction (20).

2. Mould for forming workpieces according to claim 1, **characterised by** at least one first moulding part (4), which can be joined detachably to at least one second moulding part (6), in that the moulding parts (4, 6) in the joined state delimit a cavity (8) which determines the form and the volume of the workpiece to be shaped.

3. Mould according to claim 1 or 2, **characterised in that** the component (12) is supported movably or unmovably in the direction (24) of its component axis (18) relative to the support means (14) for supporting the component in a floating manner.

4. Mould according to any of the preceding claims, **characterised in that** the guide (28) or the second guide (30) is a linear guide (28', 30').

5. Mould according to any of the preceding claims, **characterised in that** a free end (36, 38), in particular the head (42), of the component (12) is held in a force-fitting or form-fitting or material-bonded manner on an adapter (44), by means of which the component (12) is arranged movably on the guide (28) of the guiding body (26) along the first guiding direction (20).

6. Mould according to any of the preceding claims, **characterised in that** the guiding body (26) for forming the guide (28) for the component (12) has at least one guiding groove (46), along which the component (12) is movably guided by means of the adapter (44).

7. Mould according to any of the preceding claims, **characterised in that** the guide (28) of the guiding body (26) is designed for the form-fitting guiding of the component (12), in particular by means of the head (42) of the component (12).

8. Mould according to any of the preceding claims, **characterised in that** the guiding body (26) is arranged at least partly in a recess (48) of a moulding part (4), such that the mobility of the guiding body (26) is guided in the second guiding direction (32) and is delimited by the recess edges (50).

9. Mould according to any of the preceding claims, **characterised in that** at least one of the moulding parts (4, 6) has a component guide for the component (12), in which the component (12) is guided for movement in the direction (24) of its component axis (18).

10. Mould according to any of the preceding claims, **characterised in that** the support means (14) are configured and designed for supporting at least one ejector (12') in a floating manner.

## Revendications

1. Moule destiné au formage de pièces,
- avec au moins une première pièce de formage (4) qui comporte une cavité (8) pour le formage d'une pièce,
- avec un dispositif de retenue (10) destiné à la retenue de composants (12) sur la pièce de formage (4),
- le dispositif de retenue (10) comportant des moyens de support (14) destinés au support flottant de composants qui est agencé et constitué de telle sorte qu'au moins un composant (12) est bloqué en rotation dans la direction circonférentielle (16) par rapport à son axe de composant (18) et supporté de façon mobile radialement à son axe de composant (18) le long d'au moins une première direction de guidage, les moyens de support (14) destinés au support flottant de composants comportant au moins un corps de guidage (26),
- sur lequel le composant (12) est, radialement à son axe de composant (18) et relativement au corps de guidage (26), disposé sur un guidage (28), en particulier un guidage linéaire (28'), dans la première direction de guidage,
- le corps de guidage (26) étant à son tour disposé de façon mobile transversalement à la première direction de guidage (20) et radialement à l'axe de composant (18) sur un deuxième guidage (30) dans une deuxième direction de guidage (32),
**caractérisé en ce que**
- le corps de guidage (26) comporte un trou (34) dans lequel le composant (12) est reçu au moins par tronçons entre ses extrémités (36, 38) libres, le bord de trou (40) du trou limitant la capacité de mouvement du composant (12) le long de la première direction de guidage (20).

2. Moule destiné au formage de pièces selon la revendication 1, **caractérisé par** au moins une première pièce de formage (4) qui peut être assemblée de façon détachable à au moins une deuxième pièce de formage (6) de telle sorte que, dans l'état assemblé l'une à l'autre, les pièces de formage (4, 6) limitent une cavité (8) qui définit la forme et le volume de la pièce à former.

3. Moule selon la revendication 1 ou 2, **caractérisé en ce que**, dans la direction (24) de son axe de composant (18), le composant (12) est supporté de façon mobile ou respectivement immobile relativement aux moyens de support (14) pour le support flottant de composants.

4. Moule selon l'une des revendications précédentes, **caractérisé en ce que** le guidage (28) ou respectivement le deuxième guidage (30) est un guidage linéaire (28', 30').

5. Moule selon l'une des revendications précédentes, **caractérisé en ce qu'**une première extrémité (36, 38), en particulier la tête (42), du composant (12) est retenue par liaison de force ou respectivement de forme ou respectivement de matière sur un adaptateur (44) au moyen duquel le composant (12) est disposé de façon mobile sur le guidage (28) du corps de guidage (26) le long de la première direction de guidage (20).

6. Moule selon l'une des revendications précédentes, **caractérisé en ce que**, pour la constitution du guidage (28) pour le composant (12), le corps de guidage (26) comporte au moins une rainure de guidage (46) le long de laquelle le composant (12) est guidé en mouvement au moyen de l'adaptateur (44).

7. Moule selon l'une des revendications précédentes, **caractérisé en ce que** le guidage (28) du corps de guidage (26) est constitué pour le guidage par liaison de forme du composant (12), en particulier au moyen de la tête (42) du composant (12).

8. Moule selon l'une des revendications précédentes, **caractérisé en ce que** le corps de guidage (26) est disposé au moins par tronçons dans un creux (48) de la pièce de formage (4) de telle sorte que la capacité de mouvement du corps de guidage (26) est guidée le long de la deuxième direction de guidage (32) et limitée par les bords du creux (50).

9. Moule selon l'une des revendications précédentes, **caractérisé en ce qu'**au moins une des pièces de formage (4, 6) comporte un guidage de composant pour le composant (12) dans lequel le composant (12) est guidé en mouvement pour un mouvement dans la direction (24) de son axe de composant (18).

10. Moule selon l'une des revendications précédentes, **caractérisé en ce que** les moyens de support (14) sont agencés et constitués pour le support flottant de composants d'au moins un éjecteur (12').
